(19) Europäisches Patentamt / European Patent Office / Office européen des brevets

(11) **EP 4 693 224 A1**

(12) **EUROPEAN PATENT APPLICATION**
published in accordance with Art. 153(4) EPC

(43) Date of publication:
**11.02.2026 Bulletin 2026/07**

(21) Application number: **24881145.7**

(22) Date of filing: **31.07.2024**

(51) International Patent Classification (IPC):
**G06V 20/58** (2022.01)

(52) Cooperative Patent Classification (CPC):
**G06N 3/0455; G06N 3/0464; G06T 7/55;
G06V 10/44; G06V 10/82; G06V 20/58**

(86) International application number:
**PCT/CN2024/108996**

(87) International publication number:
**WO 2025/086774 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.10.2023 CN 202311386776**

(71) Applicant: **Huawei Technologies Co., Ltd.
Shenzhen, Guangdong 518129 (CN)**

(72) Inventors:
• **XIE, Jun
Shenzhen, Guangdong 518129 (CN)**

• **ZHOU, Lei
Shenzhen, Guangdong 518129 (CN)**
• **CAI, Jia
Shenzhen, Guangdong 518129 (CN)**
• **ZHUANG, Yan
Shenzhen, Guangdong 518129 (CN)**
• **ZHANG, Neng
Shenzhen, Guangdong 518129 (CN)**
• **YU, Hao
Shenzhen, Guangdong 518129 (CN)**

(74) Representative: **Eisenführ Speiser
Patentanwälte Rechtsanwälte PartGmbB
Johannes-Brahms-Platz 1
20355 Hamburg (DE)**

(54) **OBSTACLE DETECTION METHOD AND APPARATUS, COMPUTING DEVICE, AND SYSTEM**

(57) This application provides an obstacle detection method, apparatus, and system, and a computing device, and relates to the image processing field. The method includes: obtaining an image; then constructing a depth map of the image based on structure constraint information; and after completing depth map construction, processing the depth map to obtain a region identifier map including a plurality of regions, where any one of the plurality of regions is a traveling region or a non-traveling region. The structure constraint information includes a semantic type of each sample in the image, and the non-traveling region is considered as an obstacle. In this way, depth map construction is guided based on the semantic types of the samples, so that depth distribution of the samples in the depth map better complies with a depth distribution rule corresponding to the semantic types to which the samples belong. This improves accuracy of the depth map, and helps accurately recognize the traveling region like the ground and the non-traveling region like the obstacle, thereby improving obstacle recognition accuracy.

FIG. 3a

## Description

This application claims priority to Chinese Patent Application No. 202311386776.7, filed with the China National Intellectual Property Administration on October 23, 2023 and entitled "OBSTACLE DETECTION METHOD, APPARATUS, AND SYSTEM, AND COMPUTING DEVICE", which is incorporated herein by reference in its entirety.

## TECHNICAL FIELD

This application relates to the image processing field, and in particular, to an obstacle detection method, apparatus, and system, and a computing device.

## BACKGROUND

After recognizing a traveling road surface and an obstacle, an intelligent driving system may control a device like a vehicle or a robot to implement autonomous driving (or assisted driving) and automatic parking (or assisted parking). An existing intelligent driving system is usually equipped with sensors such as a visual camera, an ultrasonic radar, and/or a lidar, and recognizes a traveling road surface, an obstacle, and the like based on data obtained by the sensors.

General obstacles mainly refer to target types that are difficultly defined in a unified manner in an autonomous driving scenario, for example, all abnormal protrusions on the ground such as stones, fallen trees, and worn-out tires. However, due to reasons such as a blind spot of the sensor or an insufficient generalization capability of a recognition algorithm, an obstacle detection method of the existing intelligent driving system cannot accurately recognize the general obstacle. Therefore, the existing intelligent driving system has poor obstacle recognition accuracy. As a result, the device such as the vehicle or the robot cannot detect the obstacle during traveling, resulting in a collision.

## SUMMARY

Embodiments of this application provide an obstacle detection method, apparatus, and system, and a computing device, to resolve a problem of poor obstacle recognition accuracy of an intelligent driving system.

According to a first aspect, an obstacle detection method is provided. The obstacle detection method includes: obtaining an image; then constructing a first depth map (depth map) of the image based on a structure constraint, where the structure constraint information includes a semantic type of each sample in the image; and after first depth map construction is completed, processing the first depth map to obtain a region identifier map. The region identifier map includes a plurality of regions, any one of the plurality of regions is a traveling region or a non-traveling region, and the non-traveling region is considered as an obstacle.

The semantic type includes at least one of ground information, wall information, and sky information. The traveling region is a region in which a vehicle can safely travel, for example, the ground. The non-traveling region is a region in which the vehicle cannot safely travel, for example, a wall or an obstacle.

According to the foregoing obstacle detection method, the structure constraint information is introduced during depth map construction of the image. During depth map construction, depth construction of samples of all semantic types is constrained respectively based on the semantic types such as the ground information, the wall information, or the sky information of the samples. In this way, depth map construction is constrained based on the semantic types of the samples, so that depth distribution of the samples in the depth map can better comply with a depth distribution rule corresponding to the semantic types to which the samples belong. This improves accuracy of the depth map. Further, the traveling region such as the ground and the non-traveling region such as the obstacle including a general obstacle can be accurately recognized in the region identifier map. This improves accuracy of recognizing the obstacle such as the general obstacle, and further ensures safety of autonomous driving (or assisted driving) and automatic parking (or assisted parking).

An execution body of the obstacle detection method is not limited in this application. The obstacle detection method may be performed by any computing device that can implement an image processing function such as image recognition. For example, the obstacle detection method may be performed by a central processing unit (central processing unit, CPU) or a computing device such as a vehicle-mounted computer, a computer, or a robot that includes a processor. The following uses an example in which the obstacle detection method is performed by a computing device for description.

In a possible implementation, the computing device inputs the image into a dense depth estimation model to obtain the first depth map, where the dense depth estimation model is obtained through training based on the structure constraint information. For example, a supervision signal in a training process of the dense depth estimation model includes a structure constraint supervision signal. The first depth map includes a depth value of each sample in the image, that is, a distance between each sample and a camera configured to shoot the image.

In this way, pixel-wise depth matching is performed on the image through dense depth estimation, to ensure integrity of the depth value in the first depth map. This helps improve accuracy of segmentation of the traveling region and the non-traveling region, thereby improving obstacle recognition accuracy.

In a possible implementation, the dense depth estimation model includes a monocular depth estimation network; and the training process of the dense depth estimation model includes: The computing device constructs at least one supervision signal, where the at least one supervision signal includes a structure constraint supervision signal. Then, the computing device inputs a reference frame of image into the monocular depth estimation network, to obtain a second depth map output by the monocular depth estimation network. The computing device then computes a loss of each of the at least one supervision signal based on the second depth map, and determines a total loss function based on the loss of each supervision signal. Finally, the computing device performs backpropagation based on the total loss function, to update a parameter of the dense depth estimation model. The reference frame of image and the image used to construct the first depth map are shot by the same camera. The computing device may directly obtain the image and/or the reference frame of image from the camera, or obtain the image and/or the reference frame of image from a storage device configured to store the image shot by the camera.

In this way, in the training process of the dense depth estimation model, the structure constraint supervision signal is used as supervision for model training, and a loss of the structure constraint supervision signal is introduced to guide update of the model parameter, so that the depth map output by the dense depth estimation model obtained through training meets a structure constraint condition.

Optionally, the computing device repeats the training process of the dense depth estimation model until the model converges to obtain the trained dense depth estimation model.

Optionally, the step of constructing the structure constraint supervision signal includes: The computing device projects, to the reference frame of image, a point cloud corresponding to the reference frame of image, to obtain a third depth map. The computing device separately fits depth values of samples that belong to a same semantic type and that are in the third depth map, to obtain the structure constraint supervision signal, that is, a plane depth of at least one plane included in the third depth map.

In this way, the computing device fits depth values of samples of a same semantic type in the image as samples of a same object or a same plane, thereby improving accuracy of fitting the depth values and improving accuracy of the structure constraint supervision signal. Further, an abnormal (for example, a missing depth) depth value in a predicted depth value of each plane can be recognized based on a plane depth of the plane as the structure constraint supervision signal, to resolve the foregoing abnormal problem in the model training process, and ensure accuracy of the dense depth estimation model obtained through training based on the structure constraint supervision signal.

Optionally, the semantic type of each sample in the image is extracted by a semantic segmentation model.

In a possible implementation, the loss of the structure constraint supervision signal may include at least one of a normal vector constraint loss of a plane, a depth constraint loss of the plane, and the like.

Optionally, a step of computing the normal vector constraint loss of the plane includes: The computing device determines, based on the plane depth of the at least one plane, samples in a first plane included in the second depth map, where the first plane is one of at least one plane included in the second depth map; then, the computing device determines an average normal vector of samples of m sampling points in the first plane; and the computing device determines an average normal vector difference between the average normal vector and normal vectors of all the samples included in the first plane as the normal vector constraint loss of the plane, where m is an integer greater than or equal to 3, and each sampling point includes a plurality of samples.

In this way, plane division is performed based on the semantic type of the sample, and normal vector loss computation is performed on depth values of samples in each plane that are predicted by the monocular depth estimation network, to obtain a normal vector constraint loss of each plane. This improves accuracy of the normal vector constraint loss of the plane. Further, the dense depth estimation model is subsequently trained based on the normal vector constraint loss of the plane. This helps improve training effect, thereby improving accuracy of the trained dense depth estimation model.

Optionally, a step of computing the depth constraint loss of the plane includes: The computing device determines, based on the plane depth of the at least one plane, samples in a second plane included in the second depth map, where the second plane is one of the at least one plane included in the second depth map, and a plane that corresponds to the second plane and that is in the third depth map is a third plane; then, the computing device fills a depth value of a sample whose depth value is missing in the third plane based on the plane depth of the at least one plane, to obtain a fourth depth map; and the computing device computes an average depth difference between depth values of all samples at same locations in the fourth depth map and in the second plane in the second depth map as the depth constraint loss of the plane.

In this way, depth value supplementation is performed, based on the third depth map in which fitting is performed based on the semantic type of the sample, on the sample whose depth value is missing in a point cloud projection result. This improves integrity and accuracy of the structure constraint supervision signal. The dense depth estimation model is subsequently trained based on the depth constraint loss of the plane. This helps improve training effect, thereby improving accuracy of the trained dense depth estimation model.

In a possible implementation, the computing device converts the depth map from a pixel coordinate system to a vehicle coordinate system to obtain a fifth depth map, then adds a plurality of grids to the fifth depth map, and determines, according to a ground segmentation algorithm, a region included in each grid in the fifth depth map as a traveling region or a non-traveling region, to complete obstacle detection. The non-traveling region may be considered as the obstacle.

Optionally, the computing device corrects a depth value of each sample in the fifth depth map based on a semantic type of the sample in the fifth depth map, to obtain a corrected depth map; and then determines, according to the ground segmentation algorithm, a region included in each grid in the corrected depth map as the traveling region or the non-traveling region.

In this way, the semantic type of the sample is introduced to guide ground segmentation, and geometric information such as the depth value is further corrected based on semantic information. This improves obstacle detection accuracy, reduces a collision risk, and further improves traveling safety.

In a possible implementation, the computing device may further notify a user (for example, a driver) of obstacle information after completing obstacle detection. A manner in which the computing device notifies the user may be voice broadcasting, image displaying, or the like.

Optionally, the user triggers a notification instruction, and the computing device presents the obstacle information of the obstacle to the user in response to the notification instruction.

Optionally, the obstacle information includes distance information and category information. The distance information is determined based on a depth value of the obstacle. The category information includes a first category and a second category. The first category indicates an obstacle that is expected, based on a traveling path and a traveling speed, to collide. The second category indicates an obstacle that is expected, based on the traveling path and the traveling speed, not to collide.

In this way, the obstacle information, for example, the category information and the distance information of the obstacle, is notified to the user based on a user requirement, so that the user can learn of a distance to the obstacle and an obstacle that has a collision risk, in time during in a traveling process. This helps the user determine how to avoid the obstacle, thereby improving traveling safety.

According to a second aspect, an obstacle detection apparatus is provided. The obstacle detection apparatus includes modules configured to perform the obstacle detection method in any one of the first aspect or the possible implementations of the first aspect. The obstacle detection apparatus in this application may include a transceiver module, a depth estimation module, and a segmentation module. The transceiver module is configured to obtain an image. The depth estimation module is configured to construct a first depth map of the image based on structure constraint information, where the structure constraint information includes a semantic type of each sample in the image. The segmentation module is configured to process the first depth map to obtain a region identifier map, where the region identifier map includes a plurality of regions, any one of the plurality of regions is a traveling region or a non-traveling region, and the non-traveling region is an obstacle.

According to a third aspect, a computing device is provided, including a memory and a processor. The memory is configured to store a group of computer instructions, and when the processor executes the group of computer instructions, operation steps of the obstacle detection method in any one of the first aspect or the possible implementations of the first aspect are performed.

According to a fourth aspect, an obstacle detection system is provided. The obstacle detection system includes at least one camera and the computing device. The at least one camera is configured to obtain an image, and the computing device is configured to perform operation steps of the obstacle detection method in any one of the first aspect or the possible implementations of the first aspect based on the image obtained by the camera.

In addition, for technical effect of the obstacle detection apparatus in the second aspect, technical effect of the computing device in the third aspect, and technical effect of the obstacle detection system in the fourth aspect, refer to technical effect of the obstacle detection method in the first aspect. Details are not described herein again.

According to a fifth aspect, a readable storage medium is provided. The readable storage medium includes a computer program or instructions, and when the computer program or the instructions are run on a computer, the computer is enabled to perform the obstacle detection method in any one of the possible implementations of the first aspect.

According to a sixth aspect, a computer program product is provided. The computer program product includes a computer program or instructions, and when the computer program or the instructions are run on a computer, the computer is enabled to perform the obstacle detection method in any one of the possible implementations of the first aspect.

## BRIEF DESCRIPTION OF DRAWINGS

FIG. 1 is a diagram of a structure of a neural network;

FIG. 2 is a diagram of an architecture of an obstacle detection system according to this application;

FIG. 3a is a schematic flowchart of an obstacle detection method according to this application;

FIG. 3b is a diagram of an obstacle display manner according to this application;

FIG. 4a is a diagram of a structure of a dense depth estimation model according to this application;

FIG. 4b is a diagram of a structure of a monocular depth estimation network according to this application;

FIG. 5a is a schematic flowchart of a training process of a dense depth estimation model according to this application;

FIG. 5b is a diagram of a structure constraint supervision signal according to this application;

FIG. 6 is a schematic flowchart of ground segmentation according to this application;

FIG. 7 is a schematic flowchart of multi-frame fusion according to this application;

FIG. 8 is a diagram of a structure of an obstacle detection apparatus according to this application; and

FIG. 9 is a diagram of a structure of a computing device according to this application.

## DESCRIPTION OF EMBODIMENTS

The following describes technical solutions in embodiments of this application with reference to accompanying drawings in embodiments of this application. In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may represent a, b, c, a and b, a and c, b and c, or a, b, and c, where a, b, and c may be singular or plural.

It should be noted that in this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

An obstacle detection method provided in embodiments of this application can be applied to a scenario of autonomous driving (or assisted driving) and automatic parking (or assisted parking) of a vehicle, a robot, or the like. The following briefly describes technologies that may be used in this application.

(1) Neural network

The neural network may include a neuron. The neuron may be an operation unit that uses $x_s$ and an intercept of 1 as inputs. An output of the operation unit satisfies Formula (1).

$$h_{W,b}(x) = f(W^T x) = f(\sum_{s=1}^{n} W_s x_s + b) \quad \text{Formula (1)}$$

Herein, $h_{W,b}$ is an output of the operation unit, x is an input of the operation unit, s=1, 2, ..., or n, n is a natural number greater than 1, $W_s$ is a weight of $x_s$, b is a bias of the operation unit, and f is an activation function (activation function) of the neuron, and is used to introduce a non-linear feature into the neural network, to convert an input signal in the neuron into an output signal. The output signal of the activation function may be used as an input of a next layer, and the activation function may be a sigmoid function. The neural network is a network formed by connecting a plurality of single neurons together. In other words, an output of one neuron may be an input of another neuron. An input of each neuron may be connected to a local receptive field of a previous layer, to extract a feature of the local receptive field, and the local receptive field may be a region including several neurons. A weight represents strength of a connection between different neurons. The weight determines influence of an input on an output. A weight close to 0 means that an output is not changed when an input is changed. A negative weight means that an output is reduced when an input is increased.

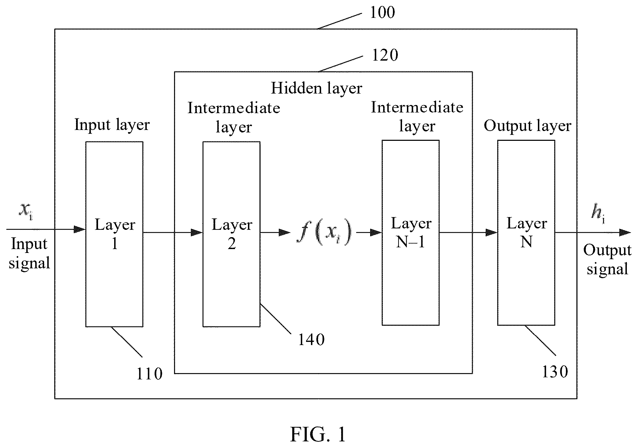

FIG. 1 is a diagram of a structure of a neural network. The neural network 100 includes N processing layers, where N is an integer greater than or equal to 3. A first layer of the neural network 100 is an input layer 110, and is responsible for receiving an input signal $x_i$. A last layer of the neural network 100 is an output layer 130, and is responsible for outputting a processing result $h_i$ of the neural network. Other layers except for the first layer and the last layer are intermediate layers 140, these intermediate layers 140 together form a hidden layer 120, and each intermediate layer 140 in the hidden layer 120 may receive an input signal and output a signal. The hidden layer 120 is responsible for processing the input signal. Each layer represents a logic level of signal processing. Through a plurality of layers, a data signal may be processed by a plurality of levels of logic.

In some feasible embodiments, the input signal of the neural network may be a signal in various forms such as a video signal and an image signal. The image signal may be image data input by a monocular camera, a binocular camera, a lidar, an ultrasonic radar, or the like. The input signal of the neural network further includes other various engineering signals that can be processed by a computer. Details are not listed one by one herein. If deep learning is performed on the image signal by using the neural network, quality of image processing of the neural network can be improved.

(2) Loss function

In a process of training a neural network, because it is expected that an output of the neural network is as close as possible to a value that is actually expected to be predicted, a current predicted value of the network may be compared with an actually expected target value, and then a weight vector at each layer of the neural network is updated based on a difference between the current predicted value and the target value (certainly, there is usually an initialization process before first updating, to be specific, a parameter is preconfigured for each layer of the neural network). For example, if the predicted value of the network is large, the weight vector is adjusted to decrease the predicted value, and adjustment is continuously performed, until the neural network can predict the actually expected target value or a value that more approximates the actually expected target value. Therefore, "how to obtain, through comparison, the difference between the predicted value and the target value" needs to be predefined. This is a loss function (loss function) or an objective function (objective function). The loss function and the objective function are important equations used to measure the difference between the predicted value and the target value. The loss function is used as an example. A larger output value (loss) of the loss function indicates a larger difference. Therefore, training of the neural network is a process of minimizing the loss as much as possible.

A gradient is originally a vector (vector), indicating that the directional derivative of a function at this point reaches a maximum value in this direction. That is, the function changes the fastest in the direction (a direction of the gradient) at the point, and a change rate is the largest. When an optimal parameter of each network layer is searched for in the training process of the neural network, a parameter that minimizes a value of the loss function needs to be determined. A gradient of the loss function relative to a parameter needs to be computed, to find a place where the value of the loss function is as minimum as possible. To be specific, when a gradient vector is closer to 0, it indicates that the loss function reaches a minimum value point, and model accuracy reaches a maximum value point.

(3) Monocular depth estimation

Depth estimation (depth estimation) is to estimate, based on one two-dimensional image or a plurality of two-dimensional images at a plurality of fields of view, a depth of a scene in an image formed by a camera, that is, a vertical distance from a pixel of each point in the scene to an imaging plane of the camera. Depth estimation is an important step in scene reconstruction, for example, three-dimensional reconstruction, in the field of computer vision.

Monocular depth estimation (monocular depth estimation) is to predict or estimate a depth map based on a two-dimensional image of a monocular camera. The monocular camera is a camera including a single camera lens, and includes a monocular pinhole camera, a monocular fisheye camera, and the like. The depth map is an image or an image channel, and includes information related to a distance from a surface of an object in a scene to a viewpoint.

Currently, monocular depth estimation may be performed based on deep learning (for example, a neural network). A basis of monocular depth estimation based on deep learning is that a pixel value relationship can reflect a depth relationship. An estimation manner of monocular depth estimation may be summarized as fitting a function to map a two-dimensional image to a depth map.

Conventional monocular depth estimation usually includes the following two manners: (a) detecting a location of an obstacle based on a raster map by fusing radar information of an ultrasonic radar, a lidar, and the like; (b) recognizing, through visual recognition, a location of an obstacle in an image obtained by a sensor like a camera; and (c) determining a location of an obstacle in an image through visual recognition and radar information fusion.

In the manner (a), the obstacle is detected by transmitting and receiving information such as an ultrasonic wave and laser. Transmit power, an effective field of view (field of view, FOV), and the like of each of the ultrasonic wave and the laser are limited by a hardware condition or an installation location of a sensor, and the sensor such as the ultrasonic radar or the lidar does not have a height measurement capability. As a result, low-rise obstacles such as a road edge and a parking lock cannot be recognized due to insufficient echo information.

In the manner (b), the obstacle in the image is recognized according to a visual recognition algorithm. However, an obstacle type and accuracy that can be recognized by using a visual recognition method such as a neural network model are related to an obstacle type and a data amount of a training set in a training process. Generally, training of the neural network model can only ensure that the neural network model recognizes some common types of obstacles (for example, an automotive protective bollard for limiting a vehicle parking region in a parking lot), and cannot accurately recognize general obstacles such as a stone block, a pillar, a parking lock, and a fire hydrant.

In the manner (c), the obstacle is recognized by combining the manner (a) with the manner (b). However, disadvantages of the manner (a) and the manner (b) still exist. As a result, a general obstacle cannot be accurately recognized.

It can be learned that the conventional monocular depth estimation manner still cannot accurately recognize the general obstacle, and cannot effectively resolve a problem of low obstacle recognition accuracy in an autonomous driving (or assisted driving) scenario and an automatic parking (or assisted parking) scenario. This causes a dangerous accident such as a scratch or a collision of a vehicle, a robot, or the like in autonomous driving (or assisted driving) and automatic parking (or assisted parking) processes such as automatic parking and low-speed slot searching, and traveling safety cannot be ensured.

This application provides an obstacle detection method, and specifically relates to an obstacle detection method in which "depth estimation is performed by introducing semantic information-based structure constraint information to recognize an obstacle". A computing device obtains an image, constructs a first depth map of the image based on the structure constraint information, and then processes the first depth map to obtain a region identifier map. Any one of a plurality of regions in the region identifier map is a traveling region and a non-traveling region, and the non-traveling region is used as an obstacle. The structure constraint information includes a semantic type of each sample in the image, and the semantic type includes at least one of ground information, wall information, and sky information.

According to the obstacle detection method, a depth value of each sample is constructed by introducing the structure constraint information, that is, combining the semantic type of the sample in the image. During depth map construction, depth construction of the samples of the semantic types is constrained based on the semantic types of the samples such as ground information, wall information, or sky information. In this way, applicability of depth estimation to the samples of the semantic types such as the ground information, the wall information, or the sky information is ensured, accuracy of depth estimation of the depth map is improved, and accuracy of subsequent segmentation of the traveling region and the non-traveling region based on the depth map is improved, so that the computing device can more accurately obtain the non-traveling region such as a stone block, a pillar, a parking lock, or a fire hydrant through segmentation. This improves accuracy of recognizing a general obstacle, improves overall accuracy of recognizing the obstacle, and ensures safety of autonomous driving (or assisted driving) and automatic parking (or assisted parking).

The following describes implementations of embodiments of this application in detail with reference to accompanying drawings.

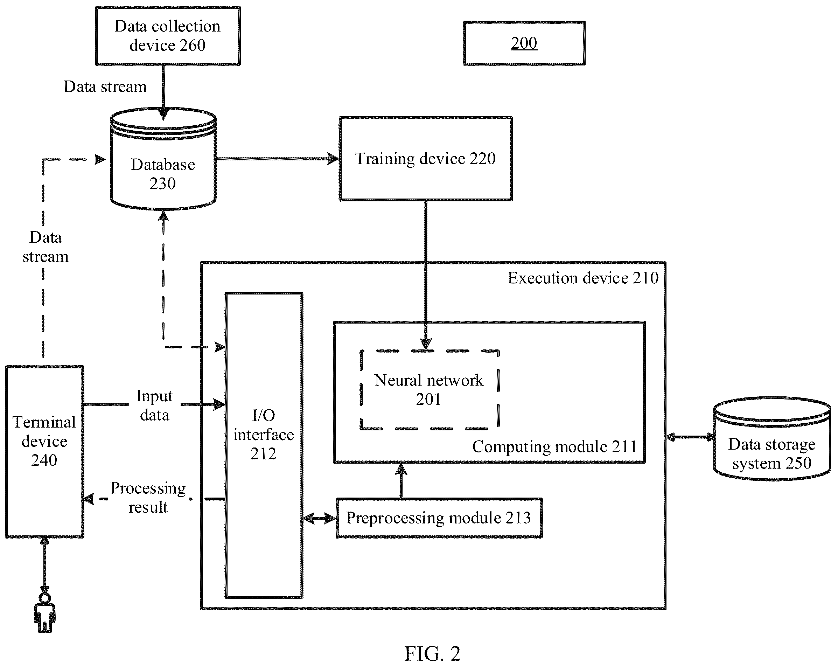

FIG. 2 is a diagram of an architecture of an obstacle detection system according to this application. As shown in FIG. 2, the obstacle detection system 200 includes an execution device 210, a training device 220, a database 230, a terminal device 240, a data storage system 250, and a data collection device 260.

The execution device 210 may be a terminal, for example, a mobile phone terminal, a tablet computer, a notebook computer, a virtual reality (virtual reality, VR) device, an augmented reality (augmented reality, AR) device, a mixed reality (Mixed Reality, MR) device, an extended reality (Extended Reality, ER) device, a camera lens, or a vehicle-mounted computer, or may be an edge device (for example, a box carrying a chip having a processing capability) or the like. For example, the execution device 210 in this application may be a vehicle-mounted computer having an autonomous driving (or assisted driving) function and an automatic parking (or assisted parking) function.

The training device 220 may be a terminal, or may be another computing device that supports integer computing, for example, a server or a cloud device.

In a possible embodiment, the execution device 210 and the training device 220 are deployed on different physical devices (for example, servers or servers in a cluster), or the execution device 210 and the training device 220 are different physical devices. For example, the execution device 210 and the training device 220 are processors deployed on different physical devices. For example, the execution device 210 may be a graphics processing unit (graphics processing unit, GPU), a central processing unit, another general-purpose processor, a digital signal processor (digital signal processing, DSP), an application-specific integrated circuit (application-specific integrated circuit, ASIC), a field-programmable gate array (field-programmable gate array, FPGA), another programmable logic device, a discrete gate, a transistor logic device, a discrete hardware component, or the like. The general-purpose processor may be a microprocessor, any conventional processor, or the like. The training device 220 may be a graphics processing unit (graphics processing unit, GPU), a neural network processing unit (neural network processing unit, NPU), a microprocessor, an application-specific integrated circuit (application-specific integrated circuit, ASIC), or one or more integrated circuits configured to control program execution in solutions of this application.

In another possible embodiment, the execution device 210 and the training device 220 are deployed on a same physical device, or the execution device 210 and the training device 220 are a same physical device.

The data collection device 260 is configured to: collect training data, and store the training data in the database 230. The data collection device 260 may be the same as or different from the execution device 210 and the training device 220. In this embodiment of this application, the data collection device 260 may be a sensor such as a camera, a lidar, or an ultrasonic radar. The camera may be a vehicle-mounted surround-view camera, a pinhole camera, a fisheye camera, or the like. The training data may be image data obtained by the camera, a point cloud obtained by the lidar, and the like.

The training device 220 is configured to train a neural network based on the training data, and training of the neural network is completed when a loss function in the neural network converges and a value of the loss function is less than a specific threshold, so that the neural network reaches specific precision. For example, the training device 220 trains the neural network based on the training data as an input, a supervision signal such as a structure constraint supervision signal as supervision, and an obstacle in an image as an output. In a training process, backpropagation is performed based on a loss function for the supervision signal, to perform gradient update on a parameter of the neural network until the value of the loss function is less than the specific threshold. Alternatively, if all the training data in the database 230 is used for training, training of the neural network is completed, and the trained neural network has target functions such as image recognition and image classification. Further, the training device 220 configures the trained neural network 201 on the execution device 210. The execution device 210 is configured to implement a function of recognizing the obstacle in the image by using the trained neural network 201.

Optionally, the neural network 201 is configured to construct a depth map of the image based on a structure constraint. The structure constraint information includes a semantic type of each sample in the image. Therefore, the neural network 201 may be monodepth2 applicable to monocular dense depth estimation, and an encoder (encoder) of monodepth2 may have a semantic segmentation function, to extract the semantic type of each sample in the image.

The semantic type includes at least one of ground information, wall information, and sky information.

In some embodiments, the execution device 210 and the training device 220 are a same computing device. The computing device may configure the trained neural network 201 on the computing device, and implement the target function such as dense depth estimation by using the trained neural network 201.

In some other embodiments, the training device 220 may configure the trained neural network 201 on a plurality of execution devices 210. Each execution device 210 implements the target function such as dense depth estimation by using the trained neural network 201.

With reference to the obstacle detection system 200, the obstacle detection method provided in embodiments can be applied to autonomous driving (or assisted driving) and automatic parking (or assisted parking) scenarios of a device such as a vehicle or a robot, for example, automatic parking assist (automatic parking assist, APA), remote parking assist (remote parking assist, RPA), home-zone parking assist (home-zone parking assist, HPA), and autonomous valet parking (autonomous valet parking, AVP).

It should be noted that, in actual application, the training data maintained in the database 230 is not necessarily all from the data collection device 260, or may be received from another device. In addition, the training device 220 may not necessarily train the neural network totally based on the training data maintained in the database 230, and may obtain training data from a cloud or another place to train the neural network. The foregoing descriptions should not be construed as a limitation on embodiments of this application.

Further, based on the functions performed by the execution device 210, the execution device 210 may be further subdivided into an architecture shown in FIG. 2. As shown in the figure, a computing module 211, an I/O interface 212, and a preprocessing module 213 are disposed in the execution device 210.

For example, the execution device 210 is a vehicle-mounted computer. The computing module 211 may be a GPU, a CPU, another general-purpose processor, a DSP, an ASIC, an FPGA or another programmable logic device, a discrete gate or a transistor logic device, a discrete hardware component, or the like in the vehicle-mounted computer.

For example, the computing module 211 is configured to run the neural network 201 to implement functions such as image recognition and image processing of the neural network 201, to obtain a first depth map of the image.

For another example, the computing module 211 is further configured to: process the first depth map output by the neural network 201, and convert the first depth map into a region identifier map. The region identifier map includes a plurality of regions, any one of the regions is a traveling region or a non-traveling region, and the non-traveling region is used as an obstacle, to complete obstacle recognition.

The I/O interface 212 is configured to exchange data with an external device. A user may input data to the I/O interface 212 via the terminal device 240, for example, an instruction used to instruct the execution device 210 to enable an obstacle detection function to perform the obstacle detection method, or a notification instruction used to instruct to present obstacle information of an obstacle. In addition, the input data may also be from the database 230. For example, the execution device 210 is a vehicle-mounted computer. The I/O interface 212 may comply with a common bus specification of a vehicle, such as a local interconnect network (local interconnect network, LIN) bus or a controller area network (controller area network, CAN) bus, and the terminal device 240 may be a display device of the vehicle-mounted computer or the like.

The preprocessing module 213 is configured to perform preprocessing based on the input data received from the I/O interface 212. In this embodiment of this application, the preprocessing module 213 may be configured to generate training data, for example, a training set, a validation set, and a test set, based on the input data received from the I/O interface 212. Optionally, the preprocessing module 213 may further perform a preprocessing operation, such as denoising, on the input data such as image data, to eliminate irrelevant information in the image and restore useful real information.

In a process in which the execution device 210 preprocesses the input data, or in a process in which the computing module 211 of the execution device 210 performs related processing such as computation, the execution device 210 may invoke data, code, and the like in the data storage system 250 for corresponding processing, or may further store, in the data storage system 250, data, an instruction, and the like that are obtained through corresponding processing.

Finally, the I/O interface 212 returns a processing result to the terminal device 240, to provide the processing result to the user, for the user to view the processing result. In this embodiment of this application, the processing result may be an image in which a traveling region and a non-traveling region are marked, or an image in which an obstacle is marked.

The terminal device 240 may be used as a data collection end, to collect, as new sample data, the input data input into the I/O interface 212 and the processing result output from the I/O interface 212 that are shown in the figure, and store the new sample data in the database 230. Certainly, sample data may alternatively not be collected by the terminal device 240, but the input data input into the I/O interface 212 and the processing result output from the I/O interface 212 that are shown in the figure are stored in the database 230 as new sample data through the I/O interface 212.

In a possible embodiment of this application, if the obstacle detection system 200 includes a notification device (not shown in FIG. 2), the I/O interface 212 may send the processing result such as the obstacle information to the notification device, to provide the processing result to the user. The notification device may be a display device, an audio play device, or the like.

FIG. 2 is merely a diagram of a system architecture according to an embodiment of this application. A location relationship between a device, a component, a module, and the like shown in FIG. 2 constitutes no limitation. For example, in FIG. 2, the data storage system 250 is an external memory relative to the execution device 210. In another case, the data storage system 250 may alternatively be disposed in the execution device 210.

The following describes in detail the obstacle detection method provided in embodiments with reference to accompanying drawings.

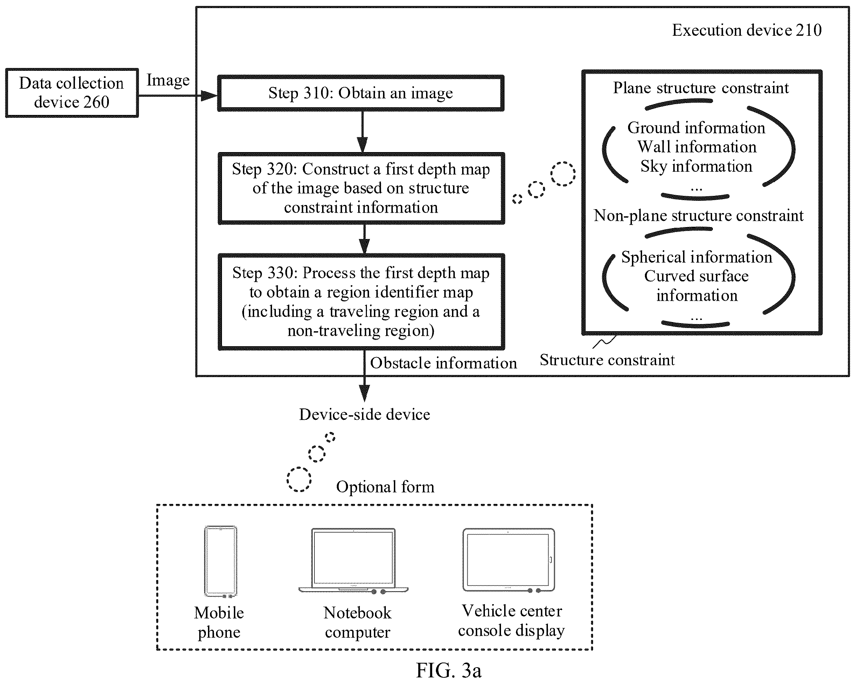

In an autonomous driving (or assisted driving) scenario and an automatic parking (or assisted parking) scenario, the execution device 210 in the obstacle detection system 200 in FIG. 2 may be a vehicle-mounted computer. In an autonomous driving (or assisted driving) process and an automatic parking (or assisted parking) process, the obstacle detection method is usually performed by the execution device 210, namely, the vehicle-mounted computer. Therefore, the following uses the execution device 210 as an example to describe the obstacle detection method in detail. As shown in FIG. 3a, the obstacle detection method may include the following step 310 to step 330.

Step 310: The execution device 210 obtains an image.

In a possible example, the execution device 210 obtains a two-dimensional image captured by the data collection device 260, namely, a camera. The two-dimensional image is an image that does not include depth information, for example, an image in a red-green-blue (red-green-blue, RGB) color mode or an image in a luminance-chrominance (YUV) color mode.

For example, the data collection device 260 is a monocular camera mounted on a vehicle, and the vehicle-mounted computer obtains the image from the database 230 or the monocular camera. For example, after capturing the image, the monocular camera sends the image to the vehicle-mounted computer, and the vehicle-mounted computer obtains the image sent by the monocular camera. For another example, after capturing the image, the monocular camera stores the image in the database 230, and the vehicle-mounted computer obtains the image from the database 230.

Step 320: The execution device 210 constructs a first depth map of the image based on structure constraint information.

In a possible example, the execution device 210 computes a depth value of each sample in the image based on the structure constraint information as a constraint condition for computing a depth of the sample in the image, to construct the first depth map of the image. The depth value of each sample is an absolute depth, that is, a distance between the camera that shoots the image and each sample in the image.

The structure constraint information includes a semantic type of each sample in the image, and the semantic type includes at least one of plane structure constraints such as ground information, wall information, and sky information. In another possible embodiment, the semantic type may further include at least one of non-plane structure constraints such as spherical information and curved surface information.

In a possible implementation, the execution device 210 performs dense depth estimation on the image based on the structure constraint information as a constraint condition for computing a depth of the sample in the image, to obtain the first depth map.

Optionally, the execution device 210 may further perform dense depth estimation on the image by using a deep learning-based dense depth estimation model.

The dense depth estimation model is used as an example. The execution device 210 inputs the image into the dense depth estimation model, to obtain the first depth map output by the dense depth estimation model. A supervision signal of the dense depth estimation model in a self-supervised training process includes a structure constraint supervision signal. Therefore, the dense depth estimation model has a function of performing dense depth estimation on the image based on the structure constraint information as the constraint condition for computing the depth of each sample in the image.

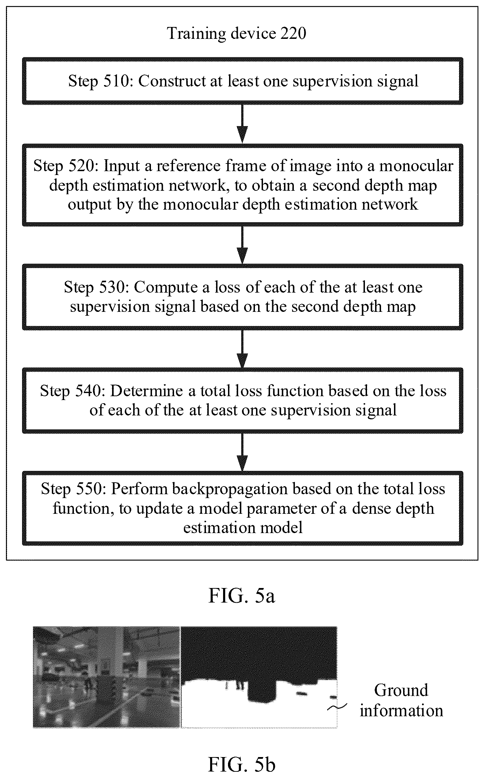

The dense depth estimation model may be obtained by training a depth estimation model by using the structure constraint supervision signal as a supervision signal in a training process. For a specific training process of the dense depth estimation model, refer to step 510 to step 550 shown in FIG. 5a. Details are not described herein.

A specific type of the depth estimation model is not limited in this application. For example, the depth estimation model may be a model like monodepth2, U-Net, or Zoedepth.

Optionally, the semantic type of each sample may be extracted by an encoder of the depth estimation model, or may be extracted by a separate semantic segmentation network inside or outside the depth estimation model.

Step 330: The execution device 210 processes the first depth map to obtain a region identifier map.

In a possible example, the execution device 210 processes the first depth map according to a ground segmentation algorithm, to obtain the region identifier map. The region identifier map includes a plurality of regions, and each region is determined as a traveling region or a non-traveling region. For example, the ground in the first depth map is a traveling region, and a non-ground region in the first depth map is a non-traveling region, namely, an obstacle.

The ground segmentation algorithm includes a flat grid method, a point cloud-based normal vector method, a model-based fitting method, a facet-mesh method, and the like.

In a first possible implementation, the execution device 210 converts the first depth map from a pixel coordinate system to a vehicle coordinate system, and then processes the depth map in the vehicle coordinate system into the region identifier map according to the ground segmentation algorithm.

In a second possible implementation, the execution device 210 may convert the first depth map from the pixel coordinate system to the vehicle coordinate system, then correct the depth value of each sample based on the semantic type of the sample, and then process a corrected depth map into the region identifier map according to the ground segmentation algorithm. In this way, because samples of different semantic types have different depth features, a semantic type of a sample included in each surface in the depth map is used to assist the execution device 210 in segmenting a plane such as the ground or a wall. This improves ground segmentation accuracy.

In a third possible implementation, because the ground segmentation result is a result obtained based on a single frame of image, and there may be a problem of instability, for example, a part of samples may be missing, the execution device 210 may further perform multi-frame fusion on the ground segmentation result of the single frame of image and a ground segmentation result of a historical frame of image after obtaining the ground segmentation result based on the single frame of image, to obtain a fused ground segmentation result. In this way, ground segmentation accuracy is further improved.

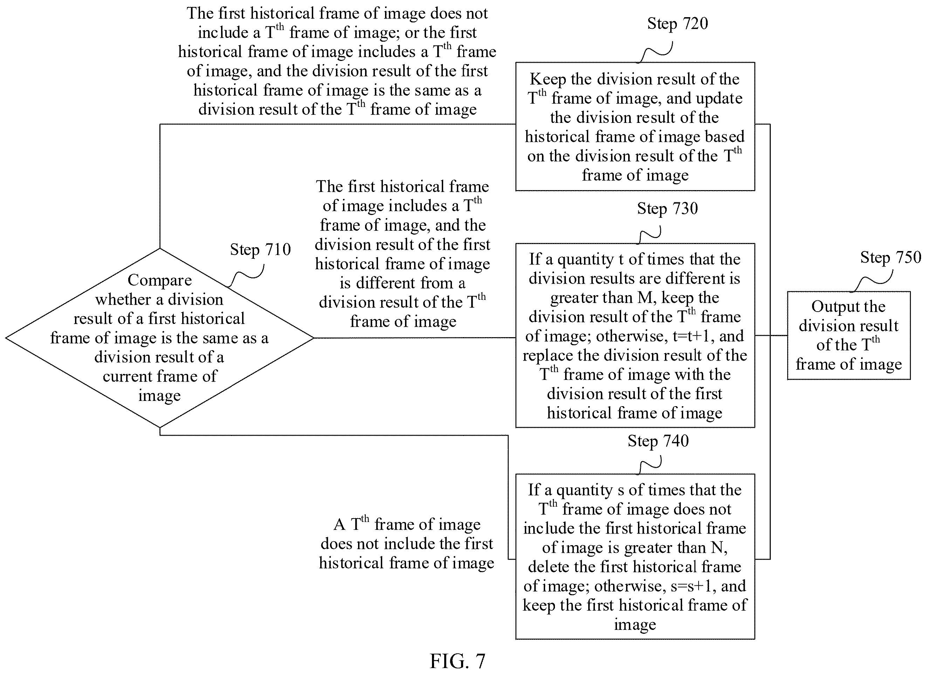

For specific steps of conversion of the first depth map from the pixel coordinate system to the vehicle coordinate system, ground segmentation, and multi-frame fusion, refer to step 710 to step 750 in FIG. 7 below. Details are not described herein.

In a possible embodiment of this application, after completing segmentation of the traveling region and the non-traveling region, the execution device 210 may further notify a user of obstacle information.

In a possible implementation, when the execution device 210 receives a notification instruction triggered by the user (for example, a driver), the execution device 210 notifies the user of the obstacle information in response to the notification instruction. The obstacle information may include category information, distance information, and the like of the obstacle.

Optionally, the execution device 210 may notify the user of the obstacle information via a notification device such as a speaker or a display. For example, the execution device 210 is a vehicle-mounted computer. The vehicle-mounted computer plays the obstacle information via a speaker of the terminal device 240, or displays the obstacle information via a display of the terminal device 240. The terminal device 240 may be a device such as a display device or a speaker connected to the vehicle-mounted computer, or may be a mobile phone, a notebook computer, a vehicle center console display, or the like that is connected to the vehicle-mounted computer and that has an audio play function or an audio play function.

Optionally, the category information of the obstacle includes a first category and a second category. The first category indicates an obstacle that is expected, based on a traveling path and a traveling speed, to collide. The second category indicates an obstacle that is expected, based on a traveling path and a traveling speed, not to collide.

A step in which the execution device 210 determines whether the vehicle collides with the obstacle may be as follows: The execution device 210 determines, based on a traveling path and a traveling speed of the vehicle, locations that the vehicle reaches at a plurality of future moments. If a location that the vehicle reaches at a future moment overlaps with a location of the obstacle, the obstacle that overlaps with the location that the vehicle reaches at the future moment is marked as the first category. If a location that the vehicle reaches at any future moment does not overlap with a location of the obstacle, the obstacle is marked as the second category.

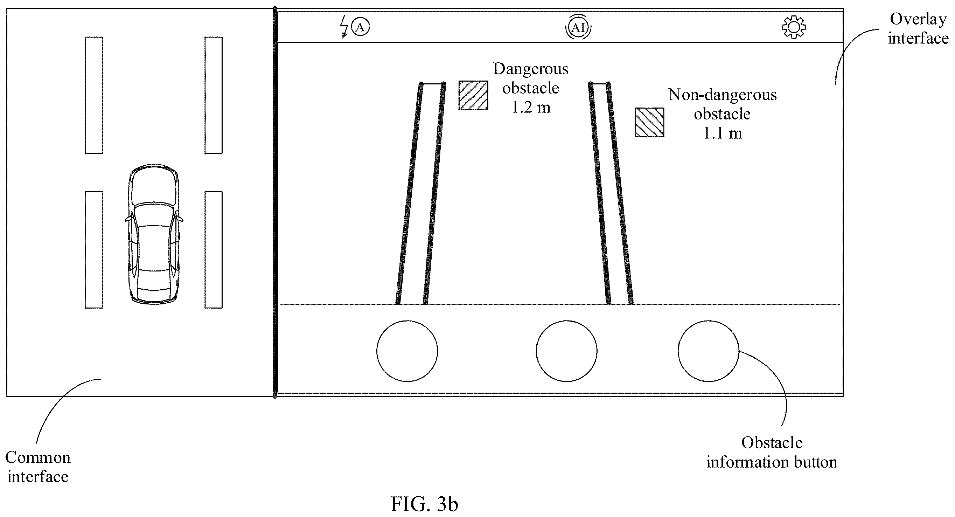

For example, the execution device 210 notifies the user of the obstacle information via the vehicle center console display. The vehicle center console display displays an obstacle information button. Before the user triggers the obstacle information button, the vehicle center console display displays common information such as a reversing image and a radar sector. After the user triggers the obstacle button, as shown in FIG. 3b, in addition to displaying information such as a panoramic image, a reversing image, and a radar sector on a common interface, the vehicle center console display may further display the category information and the distance information of the obstacle an overlay interface. For example, category information of an obstacle 1 is the first category, that is, a dangerous obstacle, and distance information is 1.2 meters; and category information of an obstacle 2 is the second category, that is, a non-dangerous obstacle, and distance information is 1.1 meters.

Based on step 310 to step 330, image depth estimation is performed by introducing the structure constraint information, that is, combining the semantic type of the sample of the image, to obtain the depth map. Further, a depth value of a sample in each plane is computed based on a depth feature of a semantic type of the sample. In this way, applicability of depth estimation to the samples of semantic types such as the ground information, the wall information, or the sky information is ensured, accuracy of depth estimation of the depth map is improved, and accuracy of subsequent segmentation of the traveling region and the non-traveling region based on the depth map is improved, so that the computing device can more accurately obtain the non-traveling region such as a stone block, a pillar, a parking lock, or a fire hydrant through segmentation. This improves accuracy of recognizing a general obstacle, improves overall accuracy of recognizing the obstacle, and ensures safety of autonomous driving (or assisted driving) and automatic parking (or assisted parking).

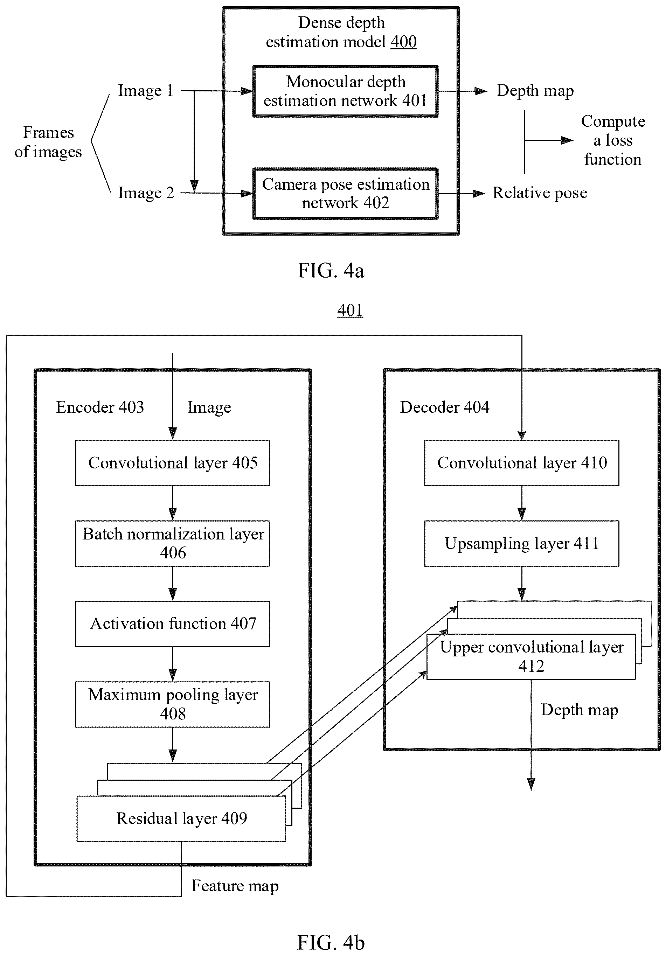

The obstacle detection method in this application is described as a whole above with reference to FIG. 2 and FIG. 3a. The training process of the dense depth estimation model is described in detail below with reference to FIG. 4a, FIG. 4b, and FIG. 5a.

The following first describes a structure of the dense depth estimation model with reference to FIG. 4a and FIG. 4b by using an example in which the dense depth estimation model is a monodepth2 model, and then describes the training process of the dense depth estimation model in detail with reference to FIG. 5a.

As shown in FIG. 4a, a dense depth estimation model 400 is monodepth2, and monodepth2 includes a monocular depth estimation network 401 and a camera pose estimation network 402. During training of monodepth2, training data input into the model is a plurality of consecutive frames of images of a video. An input of the monocular depth estimation network 401 is a reference frame of image, and an input of the camera pose estimation network 402 is the reference frame of image and a neighboring frame of image of the reference frame of image. For example, the reference frame of image is an image 1, and the neighboring frame of image of the reference frame of image is an image 2. The monocular depth estimation network 401 processes the reference frame of image by using a convolutional neural network, to output a depth map. The camera pose estimation network 402 computes a relative pose of a camera, that is, a change of a motion posture, based on the reference frame of image and the neighboring frame of image of the reference frame of image. Finally, a training device constructs a reprojected image based on outputs of the monocular depth estimation network 401 and the camera pose estimation network 402, constructs a loss function based on a reprojection error of the reprojected image, and performs backpropagation based on the loss function, to update a parameter of monodepth2, so as to optimize monodepth2.

In some possible embodiments, the neighboring frame of image of the reference frame of image may be previous n frames of images or next n frames of images of the reference frame of image, where n is a positive integer.

As shown in FIG. 4b, the monocular depth estimation network 401 includes an encoder 403 and a decoder 404.

In a possible implementation, the encoder 403 may be a residual network such as ResNet18 or ResNet50, and includes a convolutional layer 405, a batch normalization (batch normalization, BN) layer 406, an activation function 407, a maximum pooling layer 408, and at least one residual layer 409.

The convolutional layer 405 is configured to perform feature extraction on an input image, to obtain a feature map. A dimension of the convolutional layer 405 is not limited in this application. For example, the dimension of the convolutional layer 405 may be 4*4, 7*7, 9*9, or the like.

The batch normalization layer 406 is configured to perform normalization processing on the feature map extracted by the convolutional layer 405, to prevent a gradient disappearance or gradient explosion phenomenon, and increase a training speed.

The activation function 407 is configured to perform non-linear processing on the feature map. A type of the activation function 407 is not limited in this application. For example, the activation function 407 is a linear rectification function (linear rectification function, ReLU).

The maximum pooling layer 408 is configured to compress the feature map, to simplify network complexity.

The at least one residual layer 409 is used to perform a convolution operation by using a convolution kernel with an increased stride between different stages, to replace a downsampling process, so that a dimension of the feature map is reduced by times, and the reduced feature map is output at a last residual layer 409.

Optionally, the residual layer 409 includes two residual blocks, and an activation function used in each residual block may be an exponential linear unit (exponential linear unit, ELU) activation function. A quantity of residual layers 409 is not limited in this application. For example, the encoder 402 includes three, four, five, six, or eight residual layers 409.

In a possible implementation, the decoder 404 includes a convolutional layer 410, an upsampling layer 411, and at least one upper convolutional layer 412.

A function of the convolutional layer 410 is similar to that of the convolutional layer 405, that is, feature extraction. Details are not described herein.

The upsampling layer 411 is configured to zoom in the feature map.

An input of each of the at least one upper convolutional layer 412 is an output of a previous layer of network and a feature map that is output by the residual layer 409 in the encoder 403 and that has a same dimension as the output of the previous layer of network, and the feature maps with the same dimension are fused, to output a depth map. In this embodiment of this application, a quantity of upper convolutional layers 412 is the same as the quantity of residual layers 409.

The camera pose estimation network 402 includes an encoder 413 and a decoder 414.

In a possible implementation, a structure of the encoder 413 is similar to the structure of the encoder 403, and a structure of the decoder 414 is similar to the structure of the decoder 404. The structures of the encoder 413 and the decoder 414 are not described herein again, and only functions of the encoder 413 and the decoder 414 are described.

The encoder 413 is configured to perform pose estimation on an input image and a previous frame of image, to output a pose feature.

The decoder 414 is configured to: decode the pose feature, and obtain motion information of each sample through regression, to compute an axis-angle matrix and a translation matrix based on the motion information of each sample, and then predict a camera pose transformation based on the axis-angle matrix and the translation matrix. The camera pose transformation may include a translation matrix and a rotation matrix.

After the structure of the dense depth estimation model 400 is described in detail by using monodepth2 as an example with reference to FIG. 4a and FIG. 4b, the following continues to describe in detail, by using monodepth2 as an example with reference to FIG. 5a, a process in which the training device 220 trains the dense depth estimation model 400.

As shown in FIG. 5a, the training process of the dense depth estimation model 400 includes the following step 510 to step 550.

Step 510: The training device 220 constructs at least one supervision signal.

In a possible example, the at least one supervision signal includes a structure constraint supervision signal, and may further include a depth supervision signal and/or a self-supervised signal.

In a possible implementation, the training device 220 projects, to a reference frame of image, a point cloud corresponding to the reference frame of image, to obtain a third depth map, and uses the third depth map as a depth supervision signal.

Optionally, the training device 220 performs depth projection on the reference frame of image and the point cloud corresponding to the reference frame of image, and adjusts a resolution of the point cloud based on a resolution of the reference frame of image, to obtain the third depth map at the resolution of the reference frame of image.

The point cloud corresponding to the reference frame of image may be a single frame of point cloud or multiple frames of point clouds obtained by a lidar or the like.

In a possible implementation, the training device 220 separately fits depth values of samples that belong to a same semantic type and that are in the third depth map, to obtain a plane depth of at least one plane included in the third depth map, and uses the plane depth of the at least one plane as a structure constraint supervision signal. FIG. 5b shows a structure constraint supervision signal extracted from a parking lot scene. The structure constraint supervision signal indicates samples in a depth map that form a plane. For example, white samples in FIG. 5b are all samples whose semantic types belong to ground information.

Optionally, the semantic type of the sample is extracted by the training device 220 from the reference frame of image by using a semantic segmentation model such as a Mask2former.

In a possible implementation, the training device 220 inputs the reference frame of image and a neighboring frame of image of the reference frame of image into the camera pose estimation network 402 to obtain a camera pose transformation, and then interpolates a depth of the third depth map corresponding to the reference frame of image into a reference frame of image at an original resolution through bilinear transformation, to obtain a first interpolated depth map. The training device 220 may determine a pixel correspondence between the first interpolated depth map and the neighboring frame of image based on the camera pose transformation, and perform reprojection on the neighboring frame of image. In this way, the neighboring frame of image is used as a self-supervised signal, and a reprojection error is used as a loss of the self-supervised signal.

Step 520: The training device 220 inputs the reference frame of image into a monocular depth estimation network, to obtain a second depth map output by the monocular depth estimation network.

For a principle of outputting the second depth map by the monocular depth estimation network 401 based on the reference frame of image, refer to the foregoing description of the monocular depth estimation network 401. Details are not described herein.

Step 530: The training device 220 computes a loss of each of the at least one supervision signal based on the second depth map.

In a possible example, the at least one supervision signal includes a loss of the structure constraint supervision signal, and may further include a loss of the depth supervision signal and/or a loss of the self-supervised signal. The loss of the structure constraint supervision signal may include at least one of a normal vector constraint loss of a plane and a depth constraint loss of the plane.

In a possible implementation, because at least one plane depth in the structure constraint supervision signal includes a semantic type of each pixel, and at least one plane is divided into a plurality of planes, the training device 220 may compute a normal vector constraint loss of one or more planes in the second depth map based on plane division in the structure constraint supervision signal.

Optionally, the training device 220 first determines, based on plane division in the structure constraint supervision signal, a sample that is in a first plane and that is in the second depth map, where the first plane is one of the at least one plane included in the second depth map, for example, the ground or a wall. Then, the training device 220 computes an average normal vector of samples of m sampling points in the first plane, where m is an integer greater than or equal to 3, and each of the m sampling points includes a plurality of samples, for example, 100 samples, 500 samples, 681 samples, 1000 samples, or 2005 samples. Finally, the training device 220 computes an average normal vector difference between the average normal vector and normal vectors of all the samples included in the first plane, and uses the average normal vector difference as a normal vector constraint loss of the plane.

For example, a normal vector of an $i^{th}$ sample included in the first plane in the second depth map is $n_i^{pred}$, the average normal vector of the samples of the m sampling points in the first plane is $n^{gt}$, and the normal vector constraint loss of the plane may be shown in Formula (2).

$$Lplane1 = \frac{1}{n}\sum_{i=1}^{n}\left|n_i^{pred} - n^{gt}\right| \quad (2)$$

In a possible implementation, because the structure constraint supervision signal is at least one plane depth obtained by fitting each plane based on the semantic type of the sample, and an abnormal or missing depth value of a sample included in each plane is corrected during fitting, the training device 220 may fill, with the at least one plane depth in the structure constraint supervision signal, a missing sample in the third depth map obtained through point cloud projection to the reference frame of image, and then compute the depth constraint loss of the plane.

Optionally, the training device 220 first determines, based on plane division in the structure constraint supervision signal, a sample that is in a second plane and that is in the second depth map, where the second plane is one of the at least one plane included in the second depth map, for example, the ground or a wall. Then, the training device 220 fills, with a depth value of a sample at a corresponding location in a plane corresponding to a third plane in the structure constraint supervision signal, a depth value of a sample whose depth value is missing in the third plane, to obtain a fourth depth map. The second plane and the third plane correspond to a same plane in the reference frame of image. Then, the training device 220 computes an average depth difference between depth values of samples at corresponding same locations in the fourth depth map and in the second plane in the second depth map, and uses the average depth difference as the depth constraint loss of the plane.

For example, a depth value of an $i^{th}$ sample in the fourth depth map obtained through filling is $d_i^{plane\_gt}$, a depth value of an $i^{th}$ sample in the second depth map is $d_i^{pred}$, and the depth constraint loss of the plane may be shown in Formula (3).

$$Lplane2 = \frac{1}{n}\sum_{i=1}^{n}\left|d_i^{pred} - d_i^{plane\_gt}\right| \quad (3)$$

In a possible implementation, the training device 220 computes a predicted average difference between samples in the depth supervision signal, namely, the third depth map, in the supervision signal and samples in the second depth map output by the monocular depth estimation network 401, and uses the predicted average difference as a depth supervision loss.

For example, x represents a sample in an image, yi represents a depth value of an $i^{th}$ sample in the deep supervision signal, f(xi) represents a depth value of an $i^{th}$ sample in the second depth map, and the deep supervision loss may be shown in Formula (4).

$$Lgt = \frac{1}{n}\sum_{i=1}^{n}|yi - f(xi)| \quad (4)$$

In a possible implementation, a self-supervised loss is obtained based on the self-supervised signal in step 510. For a specific function structure of the self-supervised loss, refer to reprojection_loss in monodepth2. Details are not described herein.

Step 540: The training device 220 determines a total loss function based on a loss of each of the at least one supervision signal.

In a possible example, the training device 220 performs weighted summation on losses of supervision signals in the at least one supervision signal, to obtain the total loss function.

Optionally, weights of the supervision signals in the at least one supervision signal may be adjusted based on a specific requirement.

For example, the normal vector constraint loss of the plane is *Lplane*1, the depth constraint loss of the plane is *Lplane*2, the deep supervision loss is *Lgt,* and the self-supervised loss is *Lphoto.* The total loss function may be shown in Formula (5).

$$L = \gamma1 * Lgt + \gamma2 * Lphoto + \gamma3 * Lplane1 + \gamma4 * Lplane2 \quad (5)$$

Herein, $\gamma1$, $\gamma2$, $\gamma3$, and $\gamma4$ represent weights.

Step 550: The training device 220 performs backpropagation based on the total loss function, to update a parameter of the dense depth estimation model.

A specific manner in which the training device 220 updates the parameter based on the total loss function is the same as a manner of updating a parameter through backpropagation of a common neural network. Details are not described herein.

The training device 220 may repeat step 510 to step 550 to train the monocular depth estimation network 401 and the camera pose estimation network 402 until the model converges, to obtain the trained dense depth estimation model 400.

In this way, in the training process, the training device 220 uses the structure constraint supervision signal as supervision for model training, and introduces the loss of the structure constraint supervision signal to update the parameter, so that the trained dense depth estimation model 400 can more accurately predict, under a structure constraint condition, the depth value of the sample based on the semantic type, namely, a plane, to which the sample belongs.

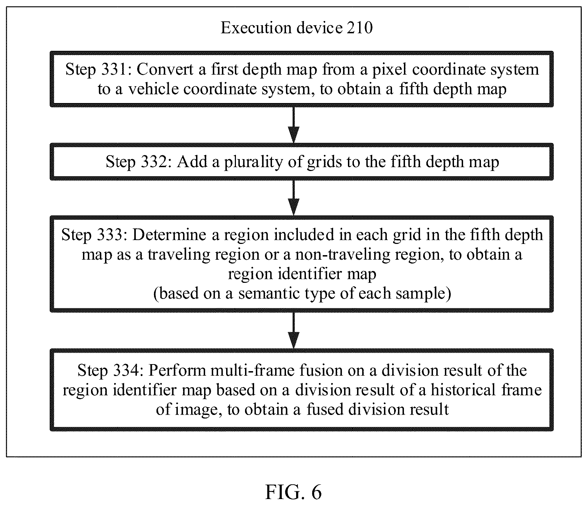

The training device 220 obtains the trained dense depth estimation model 400, and deploys the trained dense depth estimation model 400 as the neural network 201 in FIG. 2 on the execution device 210, so that the execution device 210 performs step 310 and step 320, to obtain the first depth map of the image obtained by the camera; and then, step 330 further needs to be performed to segment the first depth map, to obtain the traveling region and the non-traveling region through division, so as to recognize the non-traveling region, namely, the obstacle. The following describes step 330 in detail with reference to FIG. 6. As shown in FIG. 6, step 330 may include the following step 331 to step 334.

Step 331: The execution device 210 converts the first depth map from a pixel coordinate system to a vehicle coordinate system, to obtain a fifth depth map.

In a possible example, the execution device 210 converts the first depth map from the pixel coordinate system to an image coordinate system, then converts a depth map in the image coordinate system to a camera coordinate system, and then converts a depth map in the camera coordinate system to the vehicle coordinate system, to obtain the fifth depth map.

The pixel coordinate system is a two-dimensional rectangular coordinate system, and reflects an arrangement of pixels in a camera sensor chip, where an origin is located at an upper left corner of an image, and a u axis and a v axis are respectively parallel to an image plane. Pixel coordinates and image coordinates are actually in a translational relationship. The image coordinate system is a two-dimensional rectangular coordinate system, where an origin is an intersection point (also referred to as a principal point) of an optical axis and the image plane, namely, a center point of an image, and an x axis and a y axis are parallel to two sides of the image plane respectively. The camera coordinate system is a three-dimensional rectangular coordinate system, where an origin is located at an optical center of a lens, an x axis and a y axis are parallel to two sides of the image plane respectively, and a z axis is an optical axis of the lens, and is perpendicular to the image plane. The world coordinate system is a three-dimensional rectangular coordinate system, and may be used as a reference to describe spatial locations of the camera and a to-be-measured object. The world coordinate system may be freely determined based on an actual situation, and often coincides with a robot motion coordinate system.

In a possible implementation, the execution device 210 may convert the first depth map from the pixel coordinate system to the image coordinate system based on an intrinsic parameter of the camera according to Formula (6):

$$u = \alpha x + c_x, v = \beta y + c_y \quad (6)$$

Herein, $(u, v)$ represents coordinates of the sample in the pixel coordinate system, $(x, y)$ represents coordinates of the sample in the image coordinate system, $(c_x, c_y)$ represents coordinates of a principal point location in the intrinsic parameter of the camera, $\alpha = fx/f$, $\beta = fy/f$, and $f$ is a focal length in the intrinsic parameter of the camera.

In a possible implementation, the execution device 210 may convert the first depth map from the image coordinate system to the camera coordinate system based on the intrinsic parameter of the camera and the depth value of each sample according to Formula (7):

$$\frac{z_c}{f} = \frac{x_c}{x} = \frac{y_c}{y} \quad (7)$$

Herein, $x_c$ represents an x-axis coordinate of the sample in the camera coordinate system, $y_c$ represents a y-axis coordinate of the sample in the camera coordinate system, $z_c$ represents the depth value of the sample, $f$ represents the focal length in the intrinsic parameter of the camera, and $(x, y)$ represents the coordinates of the sample in the image coordinate system.

In a possible implementation, the execution device 210 may convert the first depth map from the camera coordinate system to the vehicle coordinate system based on an extrinsic parameter of the camera according to Formula (8), to obtain the fifth depth map:

$$\begin{bmatrix} x_w \\ y_w \\ z_w \\ 1 \end{bmatrix} = \begin{bmatrix} R & T \\ 0^T & 1 \end{bmatrix} \begin{bmatrix} x_c \\ y_c \\ z_c \\ 1 \end{bmatrix} \quad (8)$$

Herein, $(x_c, y_c, z_c)$ represents coordinates of the sample in the camera coordinate system, $(x_w, y_w, z_w)$ represents coordinates of the sample in the vehicle coordinate system, R represents a rotation matrix in the extrinsic parameter of the camera, and T represents a translation matrix in the extrinsic parameter of the camera.

Step 332: The execution device 210 adds a plurality of grids to the fifth depth map.

In an example, a quantity of grids may be adjusted based on a dimension of the fifth depth map and an obstacle recognition precision requirement. For example, the quantity of grids may be 10*10, 25*25, 100*100, or the like. A number before or after * represents a quantity of grids in one row/a quantity of grids in one column.

Step 333: The execution device 210 determines a region included in each grid in the fifth depth map as a traveling region or a non-traveling region, to obtain the region identifier map.

In a possible example, the execution device 210 divides, according to the ground segmentation algorithm, the region included in each grid in the fifth depth map into the traveling region or the non-traveling region. All regions other than the traveling region are used as non-traveling regions, and the non-traveling regions are used as obstacles in this embodiment. For example, in a process in which a vehicle performs automatic parking or the like by using an automatic driving (or assisted driving) function and an automatic parking (or assisted parking) function, the ground is a traveling region, and a wall, the sky, a parking lock, a fire hydrant, or the like is a non-traveling region.

The automatic parking may be automatic parking assist, remote parking assist, home-zone parking assist, autonomous valet parking, or the like.

A type of the ground segmentation algorithm is not limited in this application. For example, the ground segmentation algorithm may be a flat grid method, a point cloud-based normal vector method, a model-based fitting method, a facet-mesh method, or the like.

In a possible implementation, the execution device 210 has obtained the semantic type of each sample in the image in step 320, for example, ground information, sky information, and wall information. The execution device 210 may correct a depth value of the fifth depth map based on the semantic type of each sample in the process of segmenting the fifth image according to the ground segmentation algorithm, for example, correct a depth value whose semantic type is sky information to infinity, to improve segmentation accuracy.

Step 334: The execution device 210 performs multi-frame fusion on a division result of the region identifier map based on the division result of the historical frame of image, to obtain a fused division result.

In a possible example, the execution device 210 determines consistency between division results of same regions in the division result of the historical frame of image and in the division result of the region identifier map, and determines whether to fuse the division result of the same region in the historical frame of image into the division result of the region identifier map, to determine the fused division result.

Next, refer to FIG. 7. Specific steps of multi-frame fusion may include steps 710 to 750 below.

Step 710: The execution device 210 compares whether a division result of a first historical frame of image is the same as a division result of a current frame of image.

In a possible example, the execution device 210 compares whether division results of corresponding samples in the first historical frame of image and in the current frame of image are the same.

Optionally, the execution device 210 first determines the corresponding samples in the first historical frame of image and in the current frame of image. If the division results of the corresponding samples in the first historical frame of image and in the current frame of image are both traveling regions or non-traveling regions, the execution device 210 determines that the division result of the first historical frame of image and the division result of the current frame of image are the same. If the division results of the corresponding samples in the first historical frame of image and in the current frame of image are a traveling region and a non-traveling region respectively, the execution device 210 determines that the division result of the first historical frame of image and the division result of the current frame of image are different.

Optionally, a historical frame of image includes a plurality of frames of images. For example, the current frame of image is the fifth depth map, and the current frame is a T frame. In this case, the historical frame of image may include a $(T-1)^{th}$ frame of image, a $(T-2)^{th}$ frame of image, ..., a $(T-o)^{th}$ frame of image, and the like.

The corresponding samples are samples that are in the first historical frame of image and the current frame of image and that correspond to a same location in reality. The first historical frame of image is any frame of image in the plurality of frames of images included in the historical frame of image. The current frame of image and the historical frame of image, for example, a $T^{th}$ frame of image, the $(T-1)^{th}$ frame of image, the $(T-2)^{th}$ frame of image, ..., and the $(T-o)^{th}$ frame of image, are all the depth map output in step 310 to step 330, where o is a positive integer greater than 2.

Step 720: When the first historical frame of image does not include the $T^{th}$ frame of image, or when the first historical frame of image includes the $T^{th}$ frame of image, and the division result of the first historical frame of image is the same as a division result of the $T^{th}$ frame of image, the execution device 210 keeps the division result of the $T^{th}$ frame of image, and updates a division result of the historical frame of image based on the division result of the $T^{th}$ frame of image.

In a possible example, the $T^{th}$ frame of image is a region A included in the $T^{th}$ frame of image. When the first historical frame of image does not include a region A, or the first historical frame of image includes the region A and a division result of the region A in the first historical frame of image is the same as a division result of the region A in the $T^{th}$ frame of image, the execution device 210 keeps the division result of the region A in the $T^{th}$ frame of image, and adds the division result of the region A in the $T^{th}$ frame of image to the division result of the historical frame of image.

Optionally, the region A may be one or all regions included in the $T^{th}$ frame of image.

Step 730: When the first historical frame of image includes the $T^{th}$ frame of image, and the division result of the first historical frame of image is different from a division result of the $T^{th}$ frame of image, if a quantity t of times that the division results are different is greater than a preset quantity M of times, the execution device 210 keeps the division result of the $T^{th}$ frame of image; otherwise, t=t+1, and replace the division result of the $T^{th}$ frame of image with the division result of the first historical frame of image.

In a possible example, if the first historical frame of image includes the region A, and a division result of the region A in the first historical frame of image is different from a division result of the region A in the $T^{th}$ frame of image, the execution device 210 determines a quantity t of times that division results of the plurality of frames of images in the historical frame of image are different from the division result of the region A in the $T^{th}$ frame of image, and keeps the division result of the region A in the $T^{th}$ frame of image when t is greater than the preset quantity M of times; otherwise, t=t+1, and replace a division result of the region A in the division result of the $T^{th}$ frame of image with the division result of the region A in the first historical frame of image.

Step 740: When the $T^{th}$ frame of image does not include the first historical frame of image, if a quantity s of times that the $T^{th}$ frame of image does not include the first historical frame of image is greater than a preset quantity N of times, the execution device 210 deletes the first historical frame of image; otherwise, s=s+1, and keep the first historical frame of image.

In a possible example, when the first historical frame of image includes a region B, and the $T^{th}$ frame of image does not include a region B, the execution device 210 determines a quantity s of times that a plurality of frames of images in the historical frame of image include regions B and the $T^{th}$ frame of image does not include the region B. If s is greater than the preset quantity N of times, the region B in the historical frame of image is deleted; otherwise, keep the region B in the historical frame of image.

Step 750: The execution device 210 outputs the division result of the $T^{th}$ frame of image.

In a possible example, the division result of the Tth frame of image updated in step 710 to step 740 is a fused division result.

Based on step 710 to step 750, the execution device 210 performs multi-frame fusion on a ground segmentation result of a single frame of image and a ground segmentation result of a historical frame of image, to obtain a fused ground segmentation result, thereby further improving ground segmentation accuracy.

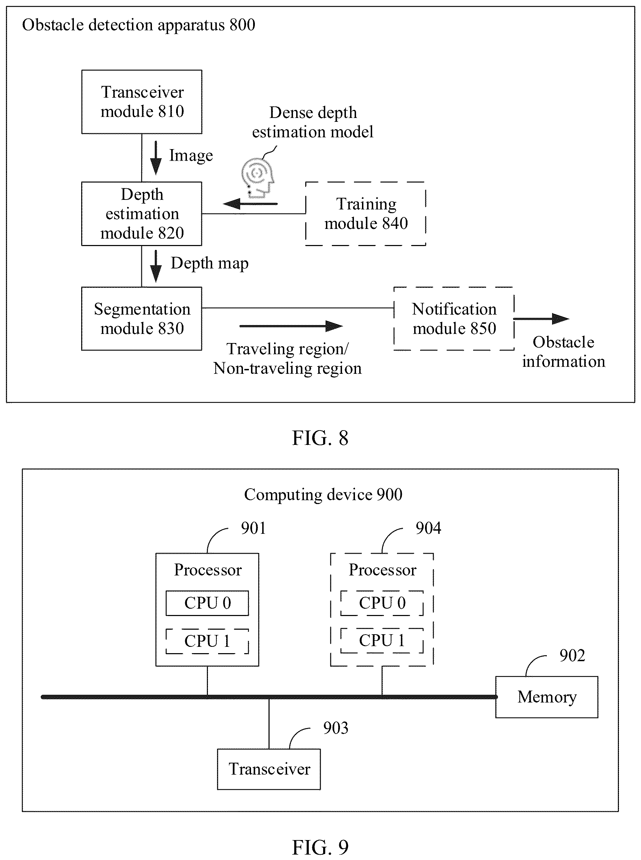

The foregoing describes in detail the obstacle detection method in this application with reference to FIG. 2 to FIG. 7. This application further provides an obstacle detection apparatus in cooperation with the foregoing obstacle detection method. FIG. 8 is a diagram of a structure of a possible obstacle detection apparatus according to an embodiment. The obstacle detection apparatus may be configured to implement functions of the execution device 210 or the training device 220 in the foregoing method embodiment, and therefore also has beneficial effect of the foregoing method embodiment. In this embodiment, the obstacle detection apparatus may be the execution device 210, the training device 220, or another device having a computing function shown in FIG. 2, or may be a module (for example, a chip) used in a server.

As shown in FIG. 8, the obstacle detection apparatus 800 includes a transceiver module 810, a depth estimation module 820, and a segmentation module 830.

The obstacle detection apparatus 800 may be configured to implement functions of the execution device 210 in the method embodiment shown in FIG. 3a. In this case, modules included in the obstacle detection apparatus 800 are specifically configured to implement the following functions.

The transceiver module 810 is configured to obtain an image. For example, the transceiver module 810 is configured to perform step 310 shown in FIG. 3a.

The depth estimation module 820 is configured to construct a first depth map of the image based on structure constraint information, where the structure constraint information includes a semantic type of each sample in the image. For example, the depth estimation module 820 is configured to perform step 320 shown in FIG. 3a.

The semantic type includes at least one of ground information, wall information, and sky information.

The segmentation module 830 is configured to process the first depth map to obtain a region identifier map, where the region identifier map includes a plurality of regions, any one of the plurality of regions is a traveling region or a non-traveling region, and the non-traveling region is an obstacle. For example, the segmentation module 830 is configured to perform step 330 shown in FIG. 3a.

In a possible implementation, the depth estimation module 820 is specifically configured to input the image into a dense depth estimation model to obtain the first depth map, where the dense depth estimation model is obtained through training based on the structure constraint information.

In a possible implementation, the segmentation module 830 is specifically configured to: convert the first depth map from a pixel coordinate system to a vehicle coordinate system to obtain a fifth depth map, add a plurality of grids to the fifth depth map, and determine, according to a ground segmentation algorithm, a region included in each grid in the fifth depth map as a traveling region or a non-traveling region, to obtain the region identifier map.

Optionally, the segmentation module 830 is specifically configured to: correct a depth value of each sample in the fifth depth map based on a semantic type of the sample in the depth map in the vehicle coordinate system, to obtain a corrected depth map; and determine, according to the ground segmentation algorithm, a region included in each grid in the corrected depth map as the traveling region or the non-traveling region, to obtain the region identifier map.

The obstacle detection apparatus 800 may be further configured to implement functions of the training device 210 in the method embodiment shown in FIG. 3a. In this case, the obstacle detection apparatus 800 may further include a training module 840, configured to implement the following functions.

In a possible implementation, the training module 840 is configured to: construct at least one supervision signal, where the at least one supervision signal includes a structure constraint supervision signal; input a reference frame of image into a monocular depth estimation network to obtain a second depth map output by the monocular depth estimation network; compute a loss of each of the at least one supervision signal based on the second depth map; determine a total loss function based on the loss of the at least one supervision signal; and perform backpropagation based on the total loss function to update a parameter of the dense depth estimation model.

Optionally, the training module 840 is specifically configured to: project, to the reference frame of image, a point cloud corresponding to the reference frame of image, to obtain a third depth map; and separately fit depth values of samples that belong to a same semantic type and that are in the third depth map, to obtain the structure constraint supervision signal, that is, a plane depth of at least one plane included in the third depth map.

Optionally, a semantic type of a sample in the reference frame of image is extracted from the reference frame of image via a semantic segmentation model.

Optionally, a loss of the structure constraint supervision signal includes a normal vector constraint loss of a plane. The training module 840 is specifically configured to: determine, based on the plane depth of the at least one plane, a sample of a first plane included in the second depth map, where the first plane is one of at least one plane included in the second depth map; compute an average normal vector of samples of m sampling points in the first plane, where m is an integer greater than or equal to 3, and each of the m sampling points includes a plurality of samples; and compute an average normal vector difference between the average normal vector and normal vectors of all the samples included in the first plane, where the normal vector constraint loss of the plane includes the average normal vector difference.

Optionally, the structure constraint supervision signal further includes the third depth map, and the loss of the structure constraint supervision signal includes a depth constraint loss of the plane. The training module 840 is specifically configured to: determine, based on the plane depth of the at least one plane, samples in a second plane included in the second depth map, where the second plane is one of the at least one plane included in the second depth map, and a plane that corresponds to the second plane and that is in the third depth map is a third plane; fill a depth value of a sample whose depth value is missing in the third plane based on the plane depth of the at least one plane, to obtain a fourth depth map; and compute an average depth difference between depth values of all samples at same locations in the fourth depth map and in the second plane in the second depth map, where a depth constraint of the plane includes the average depth difference.

In a possible implementation, the obstacle detection apparatus 800 further includes a notification module 850, configured to: present obstacle information of the obstacle to a user in response to a notification instruction, where the obstacle information includes distance information and category information, the distance information is determined based on a depth value of the obstacle, the category information includes a first category and a second category, the first category indicates an obstacle that is expected to collide, and the second category indicates an obstacle that is expected not to collide.

It should be understood that the obstacle detection apparatus 800 in this embodiment of the present invention or this application may be implemented by a CPU, or may be implemented by an application-specific integrated circuit or a programmable logic device (programmable logic device, PLD). The PLD may be a complex programmable logic device (complex programmable logical device, CPLD), a field-programmable gate array, generic array logic (generic array logic, GAL), or any combination thereof. When the obstacle detection apparatus 800 implements the obstacle detection method shown in FIG. 3a via software, the obstacle detection apparatus 800 and modules of the obstacle detection apparatus may also be software modules.

It should be understood that the execution device 210 or the training device 220 in embodiments of this application may correspond to the obstacle detection apparatus 800 in this embodiment of this application, and may correspond to a corresponding body for performing the method according to embodiments of this application. In addition, the foregoing and other operations and/or functions of the modules of the obstacle detection apparatus 800 are separately used to implement corresponding procedures of the method in FIG. 3a. For brevity, details are not described herein.

For example, FIG. 9 is a diagram of a structure of a computing device according to an embodiment of this application. The computing device may be a terminal device, a network device, a robot, a vehicle-mounted computer, or the like, or may be a chip (system) or another part or component disposed in a terminal device, a network device, a robot, or a vehicle-mounted computer. As shown in FIG. 9, the computing device 900 may include a processor 901. Optionally, the computing device 900 may further include a memory 902 and/or a transceiver 903. The processor 901 is coupled to the memory 902 and the transceiver 903, for example, may be connected through a communication bus.

The following specifically describes each component of the computing device 900 with reference to FIG. 9.

The processor 901 is a control center of the computing device 900, and may be one processor or a collective name of a plurality of processing elements. For example, the processor 901 may be one or more central processing units or an application-specific integrated circuit, or may be configured as one or more integrated circuits for implementing embodiments of this application, for example, one or more microprocessors (digital signal processors, DSPs) or one or more field-programmable gate arrays.

Optionally, the processor 901 may perform various functions of the computing device 900 by running or executing a software program stored in the memory 902 and invoking data stored in the memory 902, for example, the functions implemented in step 310 to step 330 shown in FIG. 3a or the functions implemented by the modules such as the transceiver module 810, the depth estimation module 820, and the segmentation module 830 in the obstacle detection apparatus 800.

During specific implementation, in an embodiment, the processor 901 may include one or more CPUs, for example, a CPU 0 and a CPU 1 that are shown in FIG. 9.

During specific implementation, in an embodiment, the computing device 900 may alternatively include a plurality of processors, for example, the processor 901 and a processor 904 that are shown in FIG. 9. Each of these processors may be a single-core processor (single-CPU) or may be a multi-core processor (multi-CPU). The processor herein may be one or more devices, circuits, and/or processing cores configured to process data (for example, computer program instructions).

The memory 902 is configured to store the software program for performing the solutions of this application, for example, a software program that enables the processor 901 to perform the functions in step 310 to step 330 shown in FIG. 3a or the functions implemented by the modules such as the transceiver module 810, the depth estimation module 820, and the segmentation module 830 in the obstacle detection apparatus 800; and the processor 901 controls execution. For a specific implementation, refer to the foregoing method embodiments. Details are not described herein again. In addition, the memory 902 may be further configured to store data such as an image obtained by a camera and a point cloud corresponding to the image.

Optionally, the memory 902 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, or the like), a magnetic disk storage medium or another magnetic storage device, or any other medium that can carry or store expected program code in a form of an instruction or a data structure and that can be accessed by a computer, but is not limited thereto. The memory 902 may be integrated with the processor 901, or may exist independently, and is coupled to the processor 901 through an interface circuit (not shown in FIG. 9) of the computing device 900. This is not specifically limited in embodiments of this application.

The transceiver 903 is configured to communicate with another apparatus. For example, the computing device 900 is a vehicle-mounted computer, and the transceiver 903 may be configured to communicate with a robot or communicate with another vehicle-mounted computer.

Optionally, the transceiver 903 may include a receiver and a transmitter (not separately shown in FIG. 9). The receiver is configured to implement a receiving function, and the transmitter is configured to implement a sending function.

Optionally, the transceiver 903 may be integrated with the processor 901 or may exist independently, and is coupled to the processor 901 through an interface circuit (not shown in FIG. 9) of the computing device 900. This is not specifically limited in embodiments of this application.

It should be noted that a structure of the computing device 900 shown in FIG. 9 does not constitute a limitation on the device. An actual device may include more or fewer parts than those shown in the figure, or combine some parts, or have different parts arrangements.

In addition, for technical effect of the computing device 900, refer to the technical effect of the obstacle detection method in the foregoing method embodiment. Details are not described herein again.

It should be understood that, the processor in embodiments of this application may be a central processing unit, or the processor may be another general-purpose processor, a digital signal processor, an application-specific integrated circuit, a field-programmable gate array or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When software is used to implement embodiments, the foregoing embodiments may be implemented totally or partially in a form of a computer program product. The computer program product includes one or more computer instructions or computer programs. When the computer instructions or the computer programs are loaded and executed on the computer, the procedure or functions according to embodiments of this application are totally or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that this implementation goes beyond the scope of this application.

It may be clearly understood by a person skilled in the art that, for ease and brevity of description, for a detailed working process of the foregoing system and apparatus, refer to a corresponding process in the foregoing method embodiment. Details are not described herein.

In the several embodiments provided in this application, it should be understood that the disclosed system, apparatus, and method may be implemented in another manner. For example, the apparatus embodiments described above are merely examples. For example, division into modules is merely logic function division. In actual implementation, there may be another division manner. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, may be located at one location, or may be distributed on a plurality of network modules. Some or all of the modules may be selected based on an actual requirement to achieve the objectives of the solutions of embodiments.

In addition, functional modules in embodiments of this application may be integrated into one processing module, or each of the modules may exist alone physically, or two or more modules may be integrated into one module.

When the functions are implemented in a form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An obstacle detection method, comprising:

   obtaining an image;
   constructing a first depth map of the image based on structure constraint information, wherein the structure constraint information comprises a semantic type of each sample in the image; and
   processing the first depth map to obtain a region identifier map, wherein the region identifier map comprises a plurality of regions, any one of the plurality of regions is a traveling region or a non-traveling region, and the non-traveling region is an obstacle.

2. The method according to claim 1, wherein constructing the first depth map of the image based on the structure constraint information comprises:
   inputting the image into a dense depth estimation model to obtain the first depth map, wherein the dense depth estimation model is obtained through training based on the structure constraint information.

3. The method according to claim 2, wherein the method further comprises a training process of the dense depth estimation model, the dense depth estimation model comprises a monocular depth estimation network, and the training process comprises:

   constructing at least one supervision signal, wherein the at least one supervision signal comprises a structure constraint supervision signal;
   inputting a reference frame of image into the monocular depth estimation network, to obtain a second depth map output by the monocular depth estimation network;

computing a loss of each of the at least one supervision signal based on the second depth map;
determining a total loss function based on the loss of each of the at least one supervision signal; and
performing backpropagation based on the total loss function, to update a parameter of the dense depth estimation model.

4. The method according to claim 3, wherein constructing the at least one supervision signal comprises constructing the structure constraint supervision signal; and constructing the structure constraint supervision signal comprises:

projecting, to the reference frame of image, a point cloud corresponding to the reference frame of image, to obtain a third depth map, wherein the third depth map comprises depth values of samples of different semantic types; and
separately fitting the depth values of the samples of the different semantic types, to obtain the structure constraint supervision signal.

5. The method according to claim 4, wherein computing the loss of each of the at least one supervision signal based on the second depth map comprises computing a normal vector constraint loss of a plane of the structure constraint supervision signal in the at least one supervision signal based on the second depth map; and computing the normal vector constraint loss of the plane of the structure constraint supervision signal in the at least one supervision signal based on the second depth map comprises:

determining, based on the structure constraint supervision signal, samples in a first plane comprised in the second depth map, wherein the first plane is one of at least one plane comprised in the second depth map; and
computing an average normal vector of samples in m groups of sampling points in the first plane, wherein m is an integer greater than or equal to 3, and each group of sampling points in the m groups of sampling points comprises a plurality of samples; and
computing an average normal vector difference between the average normal vector and normal vectors of all the samples comprised in the first plane, wherein the normal vector constraint loss of the plane comprises the average normal vector difference.

6. The method according to claim 5, wherein the structure constraint supervision signal further comprises the third depth map; computing the loss of each of the at least one supervision signal based on the second depth map comprises computing a depth constraint loss of the plane of the structure constraint supervision signal in the at least one supervision signal based on the second depth map; and computing the depth constraint loss of the plane of the structure constraint supervision signal in the at least one supervision signal based on the second depth map comprises:

determining, based on the structure constraint supervision signal, samples in a second plane comprised in the second depth map, wherein the second plane is one of the at least one plane comprised in the second depth map, and a plane that is in the third depth map and that corresponds to the second plane is a third plane;
filling, based on the structure constraint supervision signal, a depth value of a sample whose depth value is missing in the third plane, to obtain a fourth depth map; and
computing an average depth difference between depth values of all samples at same locations in the fourth depth map and in the second plane in the second depth map, wherein a depth constraint of the plane comprises the average depth difference.

7. The method according to any one of claims 1 to 6, wherein processing the first depth map to obtain the region identifier map comprises:

converting the first depth map from a pixel coordinate system to a vehicle coordinate system, to obtain a fifth depth map;
adding a plurality of grids to the fifth depth map; and
determining, according to a ground segmentation algorithm, a region comprised in each grid in the fifth depth map as the traveling region or the non-traveling region, to obtain the region identifier map.

8. The method according to claim 7, wherein determining, according to the ground segmentation algorithm, the region comprised in each grid in the fifth depth map as the traveling region or the non-traveling region, to obtain the region identifier map comprises:

correcting a depth value of each sample in the fifth depth map based on a semantic type of the sample in the depth map in the vehicle coordinate system, to obtain a corrected depth map; and
determining, according to the ground segmentation algorithm, a region comprised in each grid in the corrected depth map as the traveling region or the non-traveling region, to obtain the region identifier map.

9. The method according to any one of claims 1 to 8, wherein the method further comprises:
presenting obstacle information of the obstacle to a user in response to a notification instruction, wherein the obstacle information comprises distance information and category information, the distance information is determined based on a depth value of the obstacle, the category information comprises a first category and a second category, the first category indicates an obstacle that is expected to collide, and the second category indicates an obstacle that is expected not to collide.

10. The method according to any one of claims 1 to 9, wherein the semantic type comprises at least one of ground information, wall information, and sky information.

11. An obstacle detection apparatus, wherein the apparatus comprises a module for performing operation steps of the method according to any one of claims 1 to 10.

12. A computing device, wherein the computing device comprises a memory and a processor, the memory is configured to store a group of computer instructions, and when the processor executes the group of computer instructions, operation steps of the method according to any one of claims 1 to 10 are performed.

13. An obstacle detection system, comprising at least one camera and the computing device according to claim 12, wherein the at least one camera is configured to obtain an image, and the computing device is configured to perform operation steps of the method according to any one of claims 1 to 10 based on the image.

14. A readable storage medium, wherein the readable storage medium comprises a computer program or instructions, and when the computer program or the instructions are run on a computer, the computer is enabled to perform operation steps of the method according to any one of claims 1 to 10.

FIG. 1

200

Data collection device 260

Data stream

Database 230

Data stream

Training device 220

Execution device 210

Computing module 211

Neural network 201

Preprocessing module 213

I/O interface 212

Input data

Processing result

Terminal device 240

Data storage system 250

FIG. 2

Execution device 210

Data collection device 260 — Image →

Step 310: Obtain an image

↓

Step 320: Construct a first depth map of the image based on structure constraint information

↓

Step 330: Process the first depth map to obtain a region identifier map (including a traveling region and a non-traveling region)

Plane structure constraint

Ground information
Wall information
Sky information
...

Non-plane structure constraint

Spherical information
Curved surface information
...

Structure constraint

Obstacle information ↓

Device-side device

Optional form

Mobile phone    Notebook computer    Vehicle center console display

FIG. 3a

EP 4 693 224 A1

Common interface

Overlay interface

Dangerous obstacle 1.2 m

Non-dangerous obstacle 1.1 m

Obstacle information button

FIG. 3b

EP 4 693 224 A1

Dense depth
estimation model 400

Image 1 ──→ Monocular depth
estimation network 401 ──→ Depth map

Frames
of images

Compute
a loss
function

Image 2 ──→ Camera pose estimation
network 402 ──→ Relative pose

FIG. 4a

401

Encoder 403    Image

Convolutional layer 405

Batch normalization layer
406

Activation function 407

Maximum pooling layer
408

Residual layer 409

Feature map

Decoder 404

Convolutional layer 410

Upsampling layer 411

Upper convolutional layer
412

Depth map

FIG. 4b

Training device 220

Step 510: Construct at least one supervision signal

↓

Step 520: Input a reference frame of image into a monocular depth estimation network, to obtain a second depth map output by the monocular depth estimation network

↓

Step 530: Compute a loss of each of the at least one supervision signal based on the second depth map

↓

Step 540: Determine a total loss function based on the loss of each of the at least one supervision signal

↓

Step 550: Perform backpropagation based on the total loss function, to update a model parameter of a dense depth estimation model

FIG. 5a

Ground
information

FIG. 5b

Execution device 210

Step 331: Convert a first depth map from a pixel coordinate system to a vehicle coordinate system, to obtain a fifth depth map

Step 332: Add a plurality of grids to the fifth depth map

Step 333: Determine a region included in each grid in the fifth depth map as a traveling region or a non-traveling region, to obtain a region identifier map
(based on a semantic type of each sample)

Step 334: Perform multi-frame fusion on a division result of the region identifier map based on a division result of a historical frame of image, to obtain a fused division result

FIG. 6

The first historical frame of image does not include a $T^{th}$ frame of image; or the first historical frame of image includes a $T^{th}$ frame of image, and the division result of the first historical frame of image is the same as a division result of the $T^{th}$ frame of image

Step 720

Keep the division result of the $T^{th}$ frame of image, and update the division result of the historical frame of image based on the division result of the $T^{th}$ frame of image

The first historical frame of image includes a $T^{th}$ frame of image, and the division result of the first historical frame of image is different from a division result of the $T^{th}$ frame of image

Step 710

Compare whether a division result of a first historical frame of image is the same as a division result of a current frame of image

Step 730

If a quantity t of times that the division results are different is greater than M, keep the division result of the $T^{th}$ frame of image; otherwise, t=t+1, and replace the division result of the $T^{th}$ frame of image with the division result of the first historical frame of image

Step 750

Output the division result of the $T^{th}$ frame of image

A $T^{th}$ frame of image does not include the first historical frame of image

Step 740

If a quantity s of times that the $T^{th}$ frame of image does not include the first historical frame of image is greater than N, delete the first historical frame of image; otherwise, s=s+1, and keep the first historical frame of image

FIG. 7

FIG. 8

FIG. 9

## INTERNATIONAL SEARCH REPORT

| | International application No. |
|---|---|
| | **PCT/CN2024/108996** |

### A. CLASSIFICATION OF SUBJECT MATTER

G06V 20/58(2022.01)i

According to International Patent Classification (IPC) or to both national classification and IPC

### B. FIELDS SEARCHED

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE, BING: 障碍物, 语义, 深度, 约束, 损失, 稠密深度估计, 深度估计, 法向量, 栅格, obstacle, semantic, depth, constraint, loss, dense depth estimate, depth estimate, normal vector, raster

### C. DOCUMENTS CONSIDERED TO BE RELEVANT

| Category* | Citation of document, with indication, where appropriate, of the relevant passages | Relevant to claim No. |
|---|---|---|
| X | CN 115965933 A (SHANGHAI GOLDWAY INTELLIGENT TRANSPORTATION SYSTEM CO., LTD.) 14 April 2023 (2023-04-14) description, paragraphs 47-133, and claims 10-11 | 1-4, 7-14 |
| A | CN 109658418 A (BAIDU ONLINE NETWORK TECHNOLOGY (BEIJING) CO., LTD.) 19 April 2019 (2019-04-19) entire document | 1-14 |
| A | CN 114445648 A (NAVINFO CO., LTD.) 06 May 2022 (2022-05-06) entire document | 1-14 |
| A | CN 116342677 A (BEIJING JIDU TECHNOLOGY CO., LTD.) 27 June 2023 (2023-06-27) entire document | 1-14 |
| A | CN 116824081 A (CHONGQING SAILISI NEW ENERGY VEHICLE DESIGN INSTITUTE CO., LTD.) 29 September 2023 (2023-09-29) entire document | 1-14 |
| A | US 2022292289 A1 (GM GLOBAL TECHNOLOGY OPERATIONS LLC) 15 September 2022 (2022-09-15) entire document | 1-14 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 October 2024** | **16 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/108996**

| Patent document cited in search report | | | Publication date (day/month/year) | Patent family member(s) | | | Publication date (day/month/year) |
|---|---|---|---|---|---|---|---|
| CN | 115965933 | A | 14 April 2023 | None | | | |
| CN | 109658418 | A | 19 April 2019 | None | | | |
| CN | 114445648 | A | 06 May 2022 | None | | | |
| CN | 116342677 | A | 27 June 2023 | None | | | |
| CN | 116824081 | A | 29 September 2023 | None | | | |
| US | 2022292289 | A1 | 15 September 2022 | US | 12008817 | B2 | 11 June 2024 |
| | | | | DE | 102021129544 | A1 | 15 September 2022 |
| | | | | CN | 115082874 | A | 15 September 2022 |

Form PCT/ISA/210 (patent family annex) (July 2022)

**REFERENCES CITED IN THE DESCRIPTION**

**Patent documents cited in the description**

- CN 202311386776